# EUROPEAN PATENT SPECIFICATION

(11) **EP 4 559 551 B1**
(45) Date of publication and mention of the grant of the patent: **26.08.2026**
(21) Application number: 24460034.2
(22) Date of filing: 07.11.2024
(51) Int. Cl.: B01D 3/08, B01D 3/30, B01J 19/28

(54) **ROTOR WITH CYLINDRICAL INSERT FOR ROTATING PACKED BED APPARATUS**
ROTOR EINES PACKUNGSBETTES MIT EINEM ZYLINDRISCHEM EINSATZ
ROTOR D'UN LIT DE GARNISSAGE AVEC INSERT CYLINDRIQUE

(30) Priority: 27.11.2023 PL 44685523
(43) Date of publication of application: 28.05.2025
(73) Proprietor: Prospin sp. z o.o., 92-412 Lódz (PL)
(72) Inventor: ZAWADZKI, Dawid, 91-838 Lódz (PL); PELA, Jerzy, 91-496 Lódz (PL); PAWLOWSKI, Michal, 05-420 Józefów (PL); GÔRAK, Andrzej, 94-011 Lódz (PL)
(74) Representative: Dziubinska, Joanna

(56) References cited:
- CN-B- 101 229 503
- CN-B- 102 247 706
- CN-B- 103 239 885

## Description

The object of the invention is a rotor with an insert for a rotating packed bed apparatus used for process intensification in gas-liquid and vapour-liquid systems. Various types of rotating packed bed apparatus are known.

From WO2015101826, a rotating packed is apparatus is known which has a rotor, two plates and multiple annular permeable packing elements positioned between the first and second plate. One end of each of the multiple annular permeable elements is attached to the first plate and the other end of each of the multiple annular permeable sealing elements is attached to the second plate. US20130319235 presents a rotating packed bed apparatus which contains two plates placed on a rotating shaft.

Publication registration no.: 2020/39/I/ST8/01381 shows a diagram of a typical rotating packed bed apparatus, which consists of two plates with a packing placed between them and a shaft in the vertical axis. The shaft is located inside the housing. Such a unit has a gas and liquid phase inlet and outlet, as well as a liquid phase distributor. From CN101229503B there are known solutions that relate to a rotating bed of overweight field of baffled gas-liquid cross flowing type. The shell of the invention is divided into an upper cavity and a lower cavity by a separating plate; a sealing device is arranged between the separating plate and the upper end plate. A rotary shaft goes through the shell; the rotor consists of the upper end plate, a lower end plate, an upper concentric circle, a lower concentric circle and a liquid distributor which are fixedly connected with the rotary shaft, wherein, the upper concentric circle and the lower concentric circle are crossly positioned in the rotor to form a devious S-shaped baffled passage.

From CN103239885 there are known solutions that relate to a supergravity rotating packed bed device with a middle feeding function and a built-in liquid collection redistributor.

From CN102247706 there is known a rotating packed bed device with the function of regulating and controlling axial liquid distribution, and it belongs to the technical field of supergravity. The device comprises a closed shell; the center of the shell is provided with a rotating shaft which runs through various shell sections; and a packing layer is arranged in a rotor.

The rotor with cylindrical insert for rotating packed bed apparatus designed according to the invention is defined in claim 1 and overcomes the disadvantages of the state of the art. The solution designed according to the invention makes it possible to achieve a better seal between the rotor and the housing than known from the state of the art, thus reducing side flux emissions, extending the service life of the seals used by reducing the radial run-out of the element cooperating with the seal against the shaft.

The cylindrical insert can be used in rotors with any, i.e. vertical, horizontal or diagonal axis of rotation, whereby the lower plate of the rotor can be at the bottom, or the entire rotor can be rotated 180°, where the upper plate will become the lower and the lower will become the upper.

The rotor's diagonal plate rotation axis is located at an angle to the direction of the gravitational force; this angle is due to the angular orientation of the rotor or the angular deviation of the rotor caused by external forces.

The essence of the invention is that the cylindrical insert is concentrically positioned in a homolographic through-hole located in the upper rotor plate and in a homolographic socket in the lower rotor plate; whereby the cylindrical insert passes through the homolographic hole in the upper rotor plate and positions the upper rotor plate relative to the lower rotor plate of the rotor; whereby the rotating packed rotor consists of two rotor plates and a cylindrical insert and rotor has a shaft pivot socket in its axis, on which the lower plate of the rotor is placed; whereby the cylindrical part of the insert located in the upper plate of the rotor, at the height of the seal projects above the upper plate of the rotor, which allows for a contact with the seal and prevents gas leakages between the seal and the rotating cylindrical insert; while the lower part of the cylindrical insert has holes in the cylindrical part located between the rotor plates, through which liquid and gas flow in the manner known from the state of the art; whereby the seal is attached to any other stationary parts of the equipment allowing for an efficient cooperation of the rotating rotor with the cylindrical insert and stationary parts of the equipment; whereby the cylindrical insert is attached to the lower and upper rotor plates by way of non-permanent joint known from the state of the art; whereby the connection between the upper plate of the rotor and the cylindrical insert is a connection sealed with synthetic material; whereby the gap between the lower plate of the rotor and the cylindrical insert is profiled, with the shape of the wall with the gap between the lower plate of the rotor and the cylindrical insert being preferably cylindrical; whereby the lower part of the cylindrical insert connected to the homolographic socket has a cross-sectional shape being preferably circular, a regular polygon or irregular polygon.

The cylindrical insert for the rotor for rotating packed bed apparatus has the cylindrical part of the insert located in the upper plate of the rotor, at the height of the seal projects above the upper plate of the rotor; while the lower part of the cylindrical insert has holes in the cylindrical part located between the rotor plates, through which liquid and gas flow in the manner known from the state of the art.

The cylindrical insert for the rotor for the rotating packed bed apparatus has a gap between the lower plate of the rotor and the cylindrical insert that is preferably smooth, with the shape of the wall between the lower plate of the rotor and the cylindrical insert being preferably cylindrical. The gap between the upper plate of the rotor and the cylindrical insert is preferably smooth and the shape of the wall with the gap between the upper plate of the rotor and the cylindrical insert is preferably cylindrical or conical; whereby the connection between the upper plate of the rotor and the cylindrical insert is a connection sealed with a synthetic material.

Preferably, the cylindrical insert may consist of a single element or of several elements fitted together.

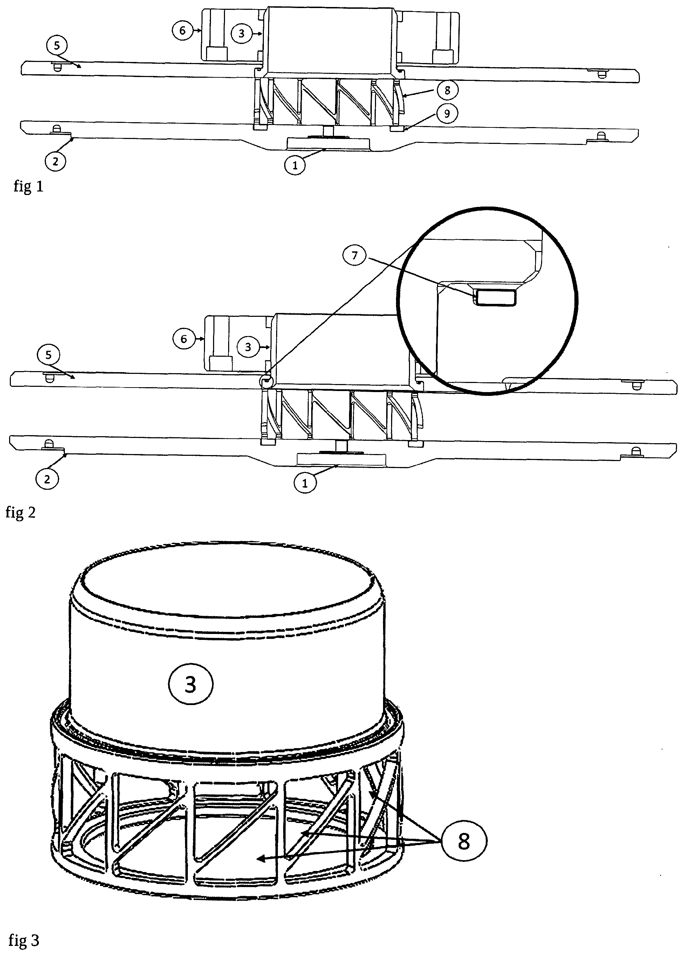

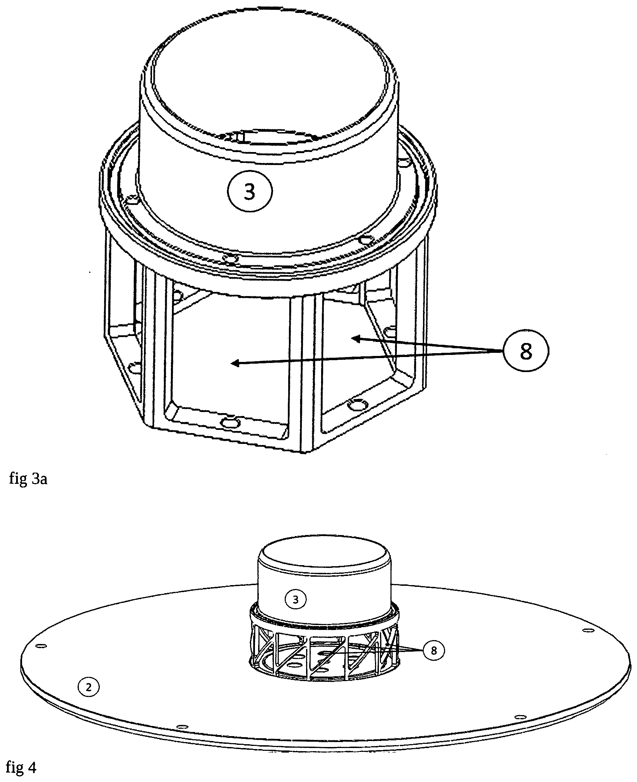

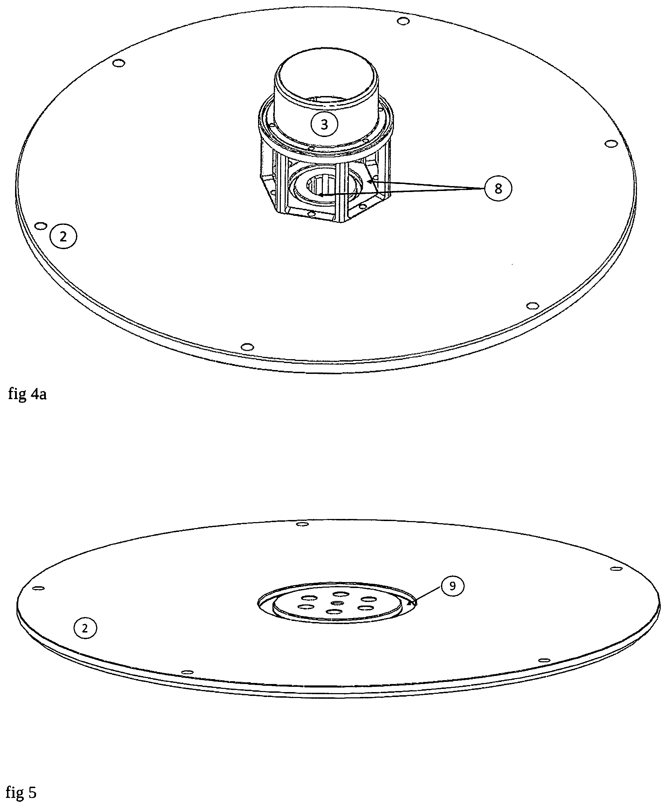

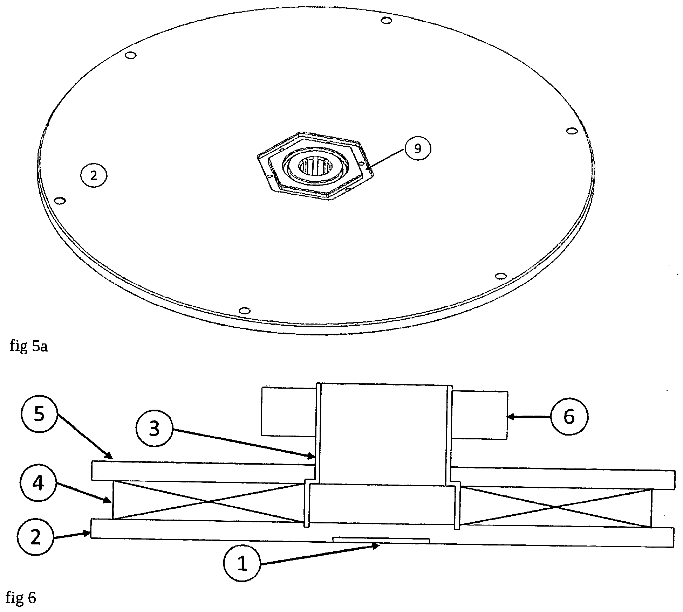

The solution designed according to the invention is shown in the accompanying drawings, Fig. 1 - 6, in which:
fig. 1 shows a cross-section through the rotor of a rotating packed bed apparatus containing the insert designed according to the invention,
fig. 2 shows a cross-section through the rotor of a rotating packed bed apparatus containing the insert designed according to the invention and the seal, fig. 3 shows the cylindrical insert,
fig. 3a shows the cylindrical insert with the lower part connected to the homolographic socket in the shape of a regular polygon in cross-section,
fig. 4 shows the cylindrical insert seated on the lower rotor plate,
fig. 4a shows the cylindrical insert seated on the lower rotor plate with the lower part connected to the homolographic socket in the shape of a regular polygon in cross-section, fig. 5 shows the lower rotor plate,
fig. 5a shows the lower rotor plate with the homolographic socket in the shape of a regular polygon in cross-section,
fig. 6 shows a simplified diagram of the rotor of a rotating packed bed apparatus.

The solution designed according to the invention is illustrated in an implementation example not limiting the invention.

### Example No. 1:

The apparatus consists of a stationary housing and a rotating rotor. The rotating packed rotor consists of two rotor plates (2) and (5) and a cylindrical insert (3). This rotor has a shaft pivot socket (1) in its axis, on which the lower plate (2) of the rotor is placed. The lower plate (2) of the rotor has a homolographic socket (9) in which the cylindrical insert (3) is placed. The cylindrical insert (3) fits onto the inner diameter of the homolographic socket (9). The cylindrical pivoinsert (3) is pressed down by the top plate (5) of the rotor, which prevents it from sliding out of the cylindrical slot.

In the solution designed according to the invention, gas and liquid flow, in the manner known from the state of the art, through the lower part of the cylindrical insert (3), which has holes (8). The upper part of the cylindrical insert (3) is placed in the seal (6), which prevents the gas from flowing past the packing (4).

The liquid, as in a typical rotating packed bed (RPB) apparatus, is introduced internally, through additional liquid distributors; and the gas flow can be either co-current (gas entering the eye of the rotor) or counter-current (gas entering the outer housing) in relation to the liquid.

On the wider outer part of the cylindrical insert (3), the packing (4) is wrapped or applied. The packing (4) and cylindrical insert (3) are covered from above by the top plate (5) of the rotor. The upper part of the cylindrical insert (3) is placed in the seal (6) located between the rotor and the device housing.

The cylindrical insert (3) concentrically positions the packing (4) relative to the plates (2) and (5) the rotor and prevents gas from flowing past the packing (4). The cylindrical insert (3) provides vertical spacing between the lower plate (2) of the rotor and the upper plate (5) of the rotor. Concentric positioning is achieved by inserting the cylindrical insert (3) into a homolographic socket (9), preferably cylindrical or conical, located in the lower plate (2) of the rotor. The prevention of gas flow past the packing (4) is achieved by static placement between the surfaces of the cylindrical insert (3) cooperating with the upper plate of the rotor (5), and by placing the upper part of the cylindrical insert (3) in a dynamic seal (6), mounted to the housing of the device, ensuring a tight seal between the insert and the external housing of the device. The play between the gap of the cylindrical part of the socket (9) of the lower rotor plate (2) and the cylindrical insert (3) is less than 0.1% of the nominal fit dimension; whereby a seal (7) preferably of the O-ring type is placed between the upper plate (5) of the rotor and the cylindrical insert (3), and the upper part of the cylindrical insert (3) is placed in the seal (6). The gap between the lower plate (2) of the rotor and the cylindrical insert (3) is preferably smooth or profiled, whereby the shape of the wall with the gap between the lower plate of the rotor and the cylindrical insert is preferably cylindrical or conical.

### Example No. 2:

The apparatus consists of a stationary housing and a rotating rotor with a diagonal axis of rotation. The rotating packed rotor consists of two rotor plates (2) and (5) and a cylindrical insert (3). The lower rotor plate (2) is positioned at a 30° angle to the direction of the force of gravity. This rotor has a shaft pivot socket (1) in its axis, on which the lower plate (2) of the rotor is placed. The lower plate (2) of the rotor has a homolographic socket (9) in which the cylindrical insert (3) is placed. The cylindrical insert (3) fits onto the outer diameter of the homolographic socket (9). The cylindrical insert (3) is bolted to the rotor plates (2) and (5).

In the solution designed according to the invention, gas and liquid flow, in the manner known from the state of the art, through the lower part of the cylindrical insert (3), which has holes (8). The upper part of the cylindrical insert (3) is placed in the seal (6), which prevents the gas from flowing past the packing (4).

The liquid, as in a typical rotating packed bed (RPB) apparatus, is introduced internally, through additional liquid distributors; and the gas flow can be either co-current (gas entering the eye of the rotor) or counter-current (gas entering the outer housing) in relation to the liquid.

On the wider outer part of the cylindrical insert (3), the packing (4) is wrapped or applied. The packing (4) and cylindrical insert (3) are covered from above by the top plate (5) of the rotor. The upper part of the cylindrical insert (3) is placed in the seal (6) located between the rotor and the device housing.

The cylindrical insert (3) concentrically positions the packing (4) relative to the plates (2) and (5) the rotor and prevents gas from flowing past the packing (4). The cylindrical insert (3) provides vertical spacing between the lower plate (2) of the rotor and the upper plate (5) of the rotor. Concentric positioning is achieved by inserting the cylindrical insert (3) into a homolographic socket (9), preferably cylindrical or conical, located in the lower plate (2) of the rotor. The prevention of gas flow past the packing (4) is achieved with a static seal between the surfaces of the cylindrical insert (3) cooperating with the upper plate of the rotor (5), and by placing the upper part of the cylindrical insert (3) in a dynamic seal (6), mounted to the housing of the device, ensuring a tight seal between the insert and the external housing of the device. The play between the gap of the cylindrical part of the socket (9) of the lower rotor plate (2) and the cylindrical insert (3) is less than 0.1% of the nominal fit dimension. A seal (7) preferably of the O-ring type is placed between the top plate (5) of the rotor and the cylindrical insert (3), and the upper part of the cylindrical insert (3) is placed in the seal (6). The gap between the lower plate (2) of the rotor and the cylindrical insert (3) is preferably smooth or profiled, whereby the shape of the wall with the gap between the lower plate of the rotor and the cylindrical insert is preferably cylindrical or conical.

### Example No. 3:

The apparatus consists of a stationary housing and a rotating rotor with a diagonal vertical axis of rotation. The rotating packed rotor consists of two rotor plates (2) and (5) and a cylindrical insert (3). This rotor has a shaft pivot socket (1) in its axis, on which the lower plate (2) of the rotor is placed. The lower plate (2) of the rotor has a homolographic socket (9) in which the cylindrical insert (3) is placed. The cylindrical insert (3) fits onto the inner diameter of the homolographic socket (9) with a tolerance that allows for relative movement of the elements of 0.05 mm. The cylindrical insert (3) is pressed by the top plate (5) of the rotor, which prevents it from sliding out of the homolographic socket (9), preferably cylindrical.

On the wider, lower, outer part of the cylindrical insert (3), the packing (4) is wrapped or applied. The packing (4) and cylindrical insert (3) are covered from above by the top plate (5) of the rotor. The narrower upper part of the cylindrical insert (3) is placed in the seal (6) located between the rotor and the device housing.

The cylindrical insert (3) concentrically positions the packing (4) relative to the plates (2) and (5) the rotor and prevents gas from flowing past the packing (4). The cylindrical insert (3) provides vertical spacing between the lower plate (2) of the rotor and the upper plate (5) of the rotor and, working in conjunction with the seals, prevents gas flow past the packing. The relative movement between the lower rotor plate (2) and the cylindrical insert (3) is preferably within 0.05 - 0.1mm. The cylindrical insert (3) is stabilised by friction and pressure from above by the upper rotor plate (5). Concentric positioning involves placing the cylindrical insert (3) in a homolographic socket (9), preferably cylindrical, located in the lower plate (2) of the rotor. The lower part of the cylindrical insert (3) has quadrangular-shaped holes (8) and the upper part of the cylindrical insert (3) is placed in the seal (6). Between the top plate (5) of the rotor and the cylindrical insert (3) a seal (7) is inserted, preferably of the O-ring type, while the upper part of the cylindrical insert (3) is placed in the seal (6).

### Example No. 4:

The apparatus consists of a stationary housing and a rotating rotor with a vertical axis of rotation. The rotating packed rotor consists of two rotor plates (2) and (5) and a cylindrical insert (3). This rotor has a shaft pivot socket (1) in its axis, on which the lower plate (2) of the rotor is placed. The lower plate (2) of the rotor has a homolographic socket (9) in which the cylindrical insert (3) is placed. The cylindrical insert (3) fits onto the inner diameter of the homolographic socket (9) with a play of 0.05 mm. The cylindrical insert (3) is pressed by the top plate (5) of the rotor, which prevents it from sliding out of the homolographic socket (9), preferably cylindrical. The homolographic socket (9) has the shape of a regular polygon in cross-section.

On the wider, lower, outer part of the cylindrical insert (3), the packing (4) is wrapped or applied. The packing (4) and cylindrical insert (3) are covered from above by the top plate (5) of the rotor. The narrower upper part of the cylindrical insert (3) is placed in the seal (6) located between the rotor and the device housing.

The cylindrical insert (3) concentrically positions the packing (4) relative to the plates (2) and (5) the rotor and prevents gas from flowing past the packing (4). The cylindrical insert (3) provides vertical spacing between the lower plate (2) of the rotor and the upper plate (5) of the rotor and, working in conjunction with the seals, prevents gas flow past the packing. The play between the lower rotor plate (2) and the cylindrical insert (3) is preferably within 0.05 - 0.2mm. The cylindrical insert (3) is stabilised by friction and pressure from the upper rotor plate (5) and a detachable screw connection, known from the state of the art. Concentric positioning is achieved by inserting the cylindrical insert (3) into a homolographic socket (9) located in the lower plate (2) of the rotor. The lower part of the cylindrical insert (3) has quadrangular-shaped holes (8) and the upper part of the cylindrical insert (3) is placed in the seal (6). A seal (7) preferably of the O-ring type is placed between the top plate (5) of the rotor and the cylindrical insert (3), and the upper part of the cylindrical insert (3) is placed in the seal (6).

### Example No. 5:

The apparatus consists of a stationary housing and a rotating rotor with a diagonal axis of rotation. The lower rotor plate (2) is positioned at a 70° angle to the direction of the force of gravity. The rotor consists of two rotor plates (2) and (5) and a cylindrical insert (3). This rotor has a shaft pivot socket (1) in its axis, on which the lower plate (2) of the rotor is placed. The lower plate (2) of the rotor has a homolographic socket (9) in which the cylindrical insert (3) is placed. The cylindrical insert (3) fits onto the inner diameter of the homolographic socket (9) with a play of 0.05 mm. The cylindrical insert (3) is pressed down by the top plate (5) of the rotor, which prevents it from sliding out of the cylindrical socket (9). The homolographic socket (9) has the shape of a irregular polygon in cross-section.

On the wider, lower, outer part of the cylindrical insert (3), the packing (4) is wrapped or applied. The packing (4) and cylindrical insert (3) are covered from above by the top plate (5) of the rotor. The narrower upper part of the cylindrical insert (3) is placed in the seal (6) located between the rotor and the device housing.

The cylindrical insert (3) concentrically positions the packing (4) relative to the plates (2) and (5) the rotor and prevents gas from flowing past the packing (4). The cylindrical insert (3) provides vertical spacing between the lower plate (2) of the rotor and the upper plate (5) of the rotor and, working in conjunction with the seals, prevents gas flow past the packing. The play between the lower rotor plate (2) and the cylindrical insert (3) is preferably within 0.05 - 0.1mm. The cylindrical insert (3) is stabilised by friction and pressure from the upper rotor plate (5). Concentric positioning is achieved by inserting the cylindrical insert (3) into a homolographic socket (9) located in the lower plate (2) of the rotor. The lower part of the cylindrical insert (3) has quadrangular-shaped holes (8) and the upper part of the cylindrical insert (3) is placed in the seal (6). A seal (7) preferably of the O-ring type is placed between the top plate (5) of the rotor and the cylindrical insert (3), and the upper part of the cylindrical insert (3) is placed in the seal (6).

## Claims

1. A rotor for a rotating packed bed apparatus consisting of an upper and lower rotor plate and a cylindrical insert , **characterised in that** the insert is placed concentrically in a homolographic through-hole located in the upper plate (5) of the rotor and in a homolographic socket (9) in the lower plate (2) of the rotor; whereby the cylindrical insert (3) passes through the homolographic hole in the upper plate (5) of the rotor and positions the upper plate of the rotor (5) relative to the lower plate (2) of the rotor; whereby the rotor has a shaft pivot socket (1) in its axis, on which the lower plate (2) of the rotor is placed; whereby the cylindrical part of the insert (3) located in the upper (5) plate of the rotor, at the height of a seal (6) projects above the upper plate (5) of the rotor; while the lower part of the cylindrical insert (3) has holes (8) in the cylindrical part located between the rotor plates, through which liquid and gas flow.

2. The rotor for rotating packed bed apparatus according to claim 1, **characterised in that** the insert is attached to the lower (2) and upper (5) rotor plates by way of temporary fastening.

3. The rotor for rotating packed bed apparatus according to claim 1, **characterised in that** the connection between the upper plate (5) of the rotor and the cylindrical insert (3) is a connection sealed with synthetic material.

4. The rotor for rotating packed bed apparatus according to claim 1, **characterised in that** the gap between the lower plate (2) of the rotor and the cylindrical insert (3) is profiled, with the shape of the wall with the gap between the lower plate of the rotor (2) and the cylindrical insert (3) being preferably cylindrical.

5. The rotor for the rotating packed bed apparatus according to claim 1 or 4, **characterised in that** the lower part of the cylindrical insert (3) connected to the homolographic socket (9) has a cross-sectional shape being circular, a regular polygon or an irregular polygon.

## Patentansprüche

1. Der Rotor für Apparate mit rotierender Füllung, der eine zylindrische Form aufweist, **dadurch gekennzeichnet, dass** der Einsatz konzentrisch in einer gleichförmigen Durchgangsbohrung in der oberen Rotorplatte (5) sowie in einer gleichförmigen Aufnahme (9) in der unteren Rotorplatte (2) angeordnet ist; wobei der zylindrische Einsatz (3) durch die gleichförmige Öffnung in der oberen Rotorplatte (5) hindurchragt und die Position der oberen Rotorplatte (5) gegenüber der unteren Rotorplatte (2) festlegt, wobei der Rotor in seiner Achse eine Aufnahme (1) für die Drehachse der Welle aufweist, auf der die untere Rotorplatte (2) angeordnet ist; wobei der zylindrische Teil des Einsatzes (3), der in der oberen Rotorplatte (5) angeordnet ist, auf Höhe der Dichtung (6) über die obere Rotorplatte (5) hinausragt; wobei der untere Teil des zylindrischen Einsatzes (3) in dem zylindrischen Teil, der zwischen den Rotorplatten angeordnet ist, Öffnungen (8) aufweist, durch die Flüssigkeit und Gas strömen.

2. Der Rotor für Apparate mit rotierender Füllung nach Anspruch 1, **dadurch gekennzeichnet, dass** der Einsatz mittels einer provisorischen Verbindung an der unteren (2) und der oberen (5) Rotorplatte befestigt ist.

3. Der Rotor für Apparate mit rotierender Füllung nach Anspruch 1, **dadurch gekennzeichnet, dass** die Verbindung zwischen der oberen Rotorplatte (5) und dem zylindrischen Einsatz (3) eine mit einem synthetischen Material abgedichtete Verbindung ist.

4. Der Rotor für Geräte mit rotierender Füllung nach Anspruch 1, **dadurch gekennzeichnet, dass** der Spalt zwischen der unteren Rotorplatte (2) und dem zylindrischen Einsatz (3) vorteilhafterweise profiliert ist, wobei die Form der Spaltwand zwischen der unteren Rotorplatte (2) und dem zylindrischen Einsatz (3) vorteilhafterweise zylindrisch oder konisch ist.

5. Der Rotor für Apparate mit rotierender Füllung nach Anspruch 1 oder 4, **dadurch gekennzeichnet, dass** der untere Teil des zylindrischen Einsatzes (3), der mit einer gleichförmigen Aufnahme (9) verbunden ist, im Querschnitt eine kreisförmige Form, regelmäßige oder unregelmäßige Vieleckform aufweist.

## Revendications

1. Un rotor pour appareils avec remplissage rotative de forme cylindrique, **caractérisé par le fait que** l'insert est placé concentriquement dans un alésage traversant ayant une forme commune situé dans la plaque supérieure (5) du rotor et dans un logement ayant une forme commune (9) situé dans la plaque inférieure (2) du rotor ; et l'insert cylindrique (3) traversant l'alésage ayant une forme commune de la plaque supérieure (5) du rotor et fixant la position de la plaque supérieure (5) du rotor par rapport à la plaque inférieure (2) du rotor ; et le rotor présentant dans son axe un logement (1) de l'axe de rotation de l'arbre sur lequel est placée la plaque inférieure (2) du rotor ; et la partie cylindrique de l'insert (3) placée dans la plaque supérieure (5) du rotor, à la hauteur du joint (6) dépasse de la plaque supérieure (5) du rotor ; et la partie inférieure de l'insert cylindrique (3) comportant, dans sa partie cylindrique située entre les plaques des rotors, les orifices (8) à travers lesquels circulent le liquide et le gaz.

2. Un rotor pour appareils avec remplissage rotative selon la revendication 1, **caractérisé par le fait que** l'insert est fixé à la plaque inférieure (2) et à la plaque supérieure (5) du rotor au moyen d'une connexion temporaire.

3. Rotor pour appareils à remplissage rotative selon la revendication 1, **caractérisé par le fait que** la liaison entre la plaque supérieure (5) du rotor et l'insert cylindrique (3) est une liaison étanche au moyen d'un matériau synthétique.

4. Un rotor pour appareils avec remplissage rotative selon la revendication 1, **caractérisé par le fait que** l'espace entre la plaque inférieure (2) du rotor et l'insert cylindrique (3) est de préférence profilé, et la forme de la paroi de l'espace entre la plaque inférieure (2) du rotor et l'insert cylindrique (3) est de préférence cylindrique ou conique.

5. Un rotor pour appareils à remplissage rotatif selon la revendication 1 ou 4, **caractérisé par le fait que** la partie inférieure de l'insert cylindrique (3) reliée à la douille (9) ayant une forme commune possède en coupe transversale polygone une forme circulaire, du polygone régulier ou irrégulier.
